# EUROPEAN PATENT SPECIFICATION

(11) **EP 1 726 490 B1**
(45) Date of publication and mention of the grant of the patent: **11.02.2009**
(21) Application number: 06252712.2
(22) Date of filing: 24.05.2006
(51) Int. Cl.: B60R 19/12, B60R 19/26, B60R 21/34

(54) **Vehicle body front part structure of automobile**
Vorderwagenaufbau eines Kraftfahrzeuges
Structure de partie avant de carrosserie d'un véhicule

(30) Priority: 27.05.2005 JP 2005154826
(43) Date of publication of application: 29.11.2006
(73) Proprietor: Honda Motor Co., Ltd., Tokyo 107-8556 (JP)
(72) Inventor: Ishizono, Manabu c/o Honda R&D Co., Ltd., Wako-shi, Saitama 351-0193 (JP); Morino, Tetsuya c/o Honda R&D Co., Ltd., Wako-shi, Saitama 351-0193 (JP); Okabe, Kojiro c/o Honda R&D Co., Ltd., Wako-shi, Saitama 351-0193 (JP)
(74) Representative: Piésold, Alexander James

(56) References cited:
- EP-A- 1 273 483
- EP-A- 1 459 941

## Description

The present invention relates to a vehicle body front part structure of an automobile, comprising leg sweeping plates connected to a vehicle body at lower portions of left and right bent parts of a front bumper.

Japanese Patent Application Laid-open No. 2001-88634 discloses a front vehicle body structure of an automobile, comprising a projecting member (leg sweeping plate) provided over the substantially entire length of a back surface of a front bumper of the automobile, wherein when the front bumper collides with a pedestrian, the impact of the collision is reduced by sweeping the leg portions under the knees of the pedestrian to throw up the pedestrian onto a bonnet without buckling of the front bumper. The above described conventional structure does not include a construction which reliably buckles the projecting member (leg sweeping plate) when the front bumper lightly collides with another automobile or the like. Therefore, there is a possibility that the vehicle body supporting the projecting member (leg sweeping plate) deforms to enlarge the damage. In addition, there is also a problem of increasing the weight and cost because the projecting member (leg sweeping plate) is disposed over the substantially entire length of the front bumper.

EP 1273483A describes a vehicle body front part structure according to the preamble of claim 1 having a forwardly projecting member (leg sweeping plate) connected to the front of a shock absorbing member provided as a bellows which is arranged to deform by collapsing rearwardly in a vehicle longitudinal direction on collision with, for example, a pedestrian. If the collision force is great enough to cause the shock absorbing portion to exceed a range of allowed deformation, then the connecting bolt is arranged to break to allow the leg sweeping plate to become disconnected from the vehicle body.

The present invention has been achieved in view of the above circumstances, and has an object to make a leg sweeping plate compact and light, and reduce damage to a vehicle body as much as possible when colliding with another automobile while securing its leg sweeping function.

The present invention provides a vehicle body front part structure of an automobile as defined by the features of claim 1, comprising leg sweeping plates connected to a vehicle body at lower portions of left and right bent parts of a front bumper, wherein each of the leg sweeping plates has an energy absorbing portion that is formed into a shape of plica having ridges extending in a lateral direction of the vehicle body and that deforms when collision energy at the time of a light collision exceeds a predetermined value, thereby preventing deformation of the vehicle body.

With the arrangement of the present invention, each of the leg sweeping plates provided at the lower portions of the left and right bent parts of the front bumper has the energy absorbing portion that deforms when collision energy inputted into the front bumper at the time of a light collision exceeds a predetermined value, thereby preventing deformation of the vehicle body. Therefore, when the front bumper collides with a pedestrian, the collision energy is at the predetermined value or less, and the leg sweeping plates do not deform, but sweep the leg portions under the knees of the pedestrian to throw up the pedestrian onto the bonnet, thereby reducing the impact of the collision. Also, when the automobile lightly collides with another automobile or the like and the collision energy exceeds the predetermined value, the leg sweeping plates deform at the energy absorbing portions, and therefore the leg sweeping plates absorb the collision energy at the energy absorbing portions, thereby avoiding damage to the vehicle body. Further, the leg sweeping plates are provided at only the left and right bent parts of the front bumper, and therefore the leg sweeping plates are light and inexpensive as compared with the case of the leg sweeping plate provided over the entire front bumper.

Further, when a large compression load acts on each of the leg sweeping plates in the longitudinal direction of the vehicle body, the energy absorbing portion formed into the shape of a plica whose ridges extending in the lateral direction of the vehicle body is reliably deformed, thereby avoiding a damage to the vehicle body.

Further still, when a large compression load acts on each of the leg sweeping plates in the longitudinal direction of the vehicle body, because the front portion of the leg sweeping plate is enhanced in rigidity by the reinforcing ribs, the energy absorbing portion in the rear of the reinforcing ribs is further reliably deformed.

The above-mentioned object, other objects, characteristics, and advantages of the present invention will become apparent from a preferred embodiment, which will be described in detail below by reference to the attached drawings, in which:
FIG. 1 is a perspective view of a vehicle body front part of an automobile;
FIG. 2 is a view taken in the direction of the arrow 2 in FIG. 1;
FIG. 3 is an enlarged view of the part 3 in FIG. 2;
FIG. 4 is a sectional view taken along the line 4-4 in FIG. 3;
FIG. 5 is a perspective view of a leg sweeping plate; and
FIG. 6 is an explanatory view of an operation at the time of light collision.

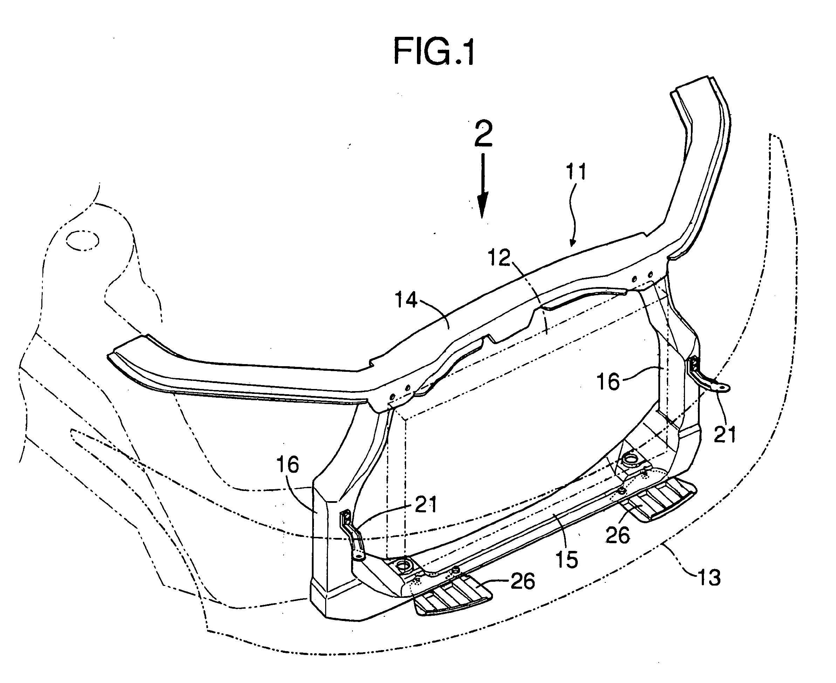

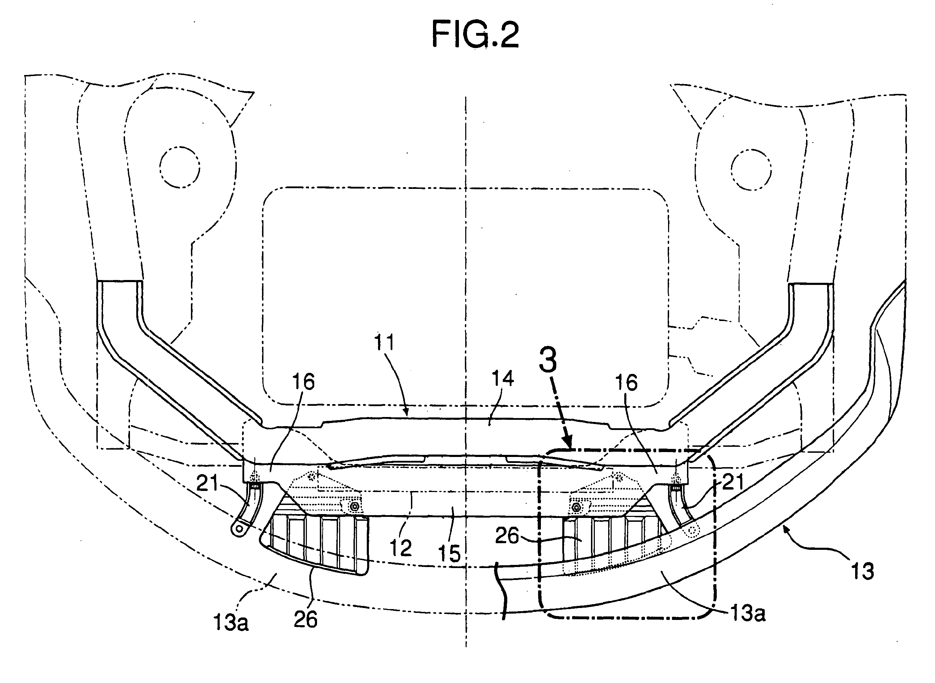

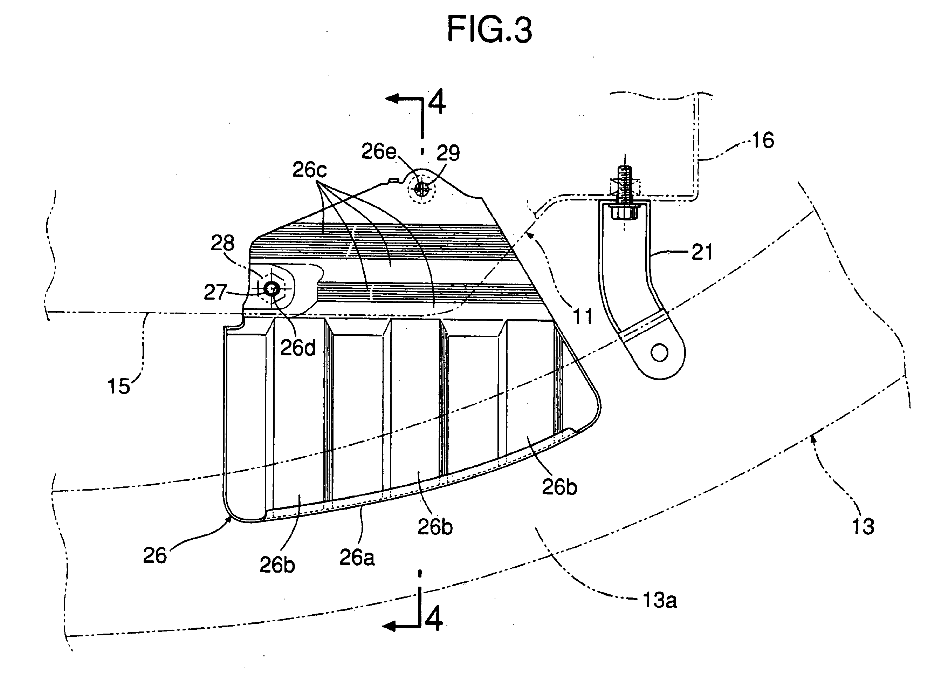

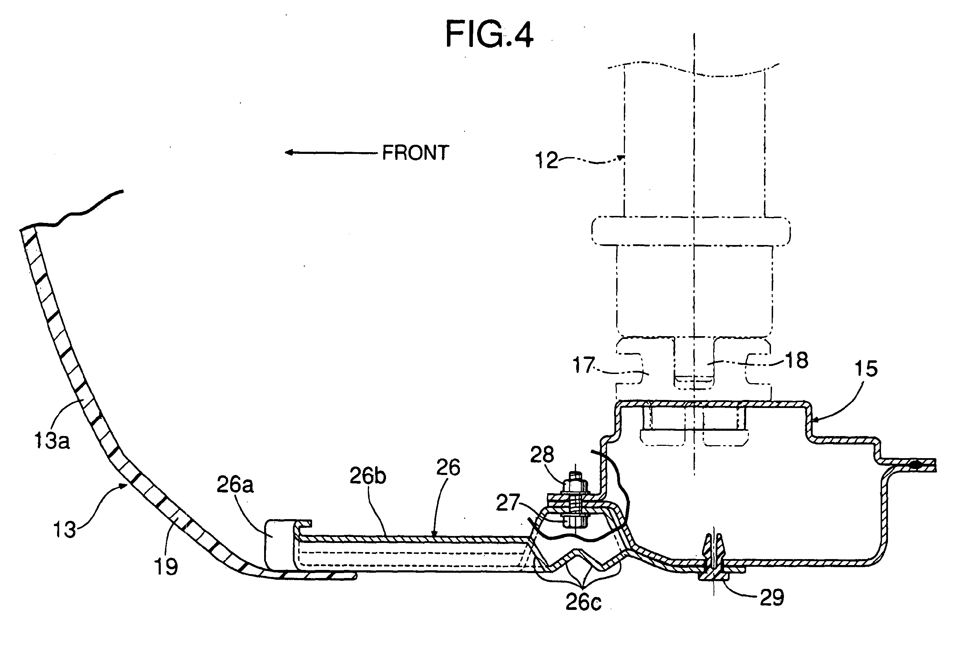

FIGS. 1 to 6 show one embodiment of the present invention. As shown in FIGS. 1 to 4, a radiator 12 is supported at a center of a bulkhead 11 disposed at a front part of a vehicle body of an automobile. External air is taken in through an unillustrated opening formed in a front surface of a front bumper 13 disposed on a front surface of the bulkhead 11, and is guided to the radiator 12 . The bulkhead 11 is constructed into a frame shape by a bulkhead upper part 14, a bulkhead lower part 15 and left and right bulkhead sides 16 and 16. Opposite ends of a lower portion of the radiator 12 are supported by fitting support pins 18 and 18 into two rubber bushes 17 and 17 which are fixed to the bulkhead lower part 15. Opposite ends of an upper portion of the radiator 12 are fixed to the bulkhead upper part 14 via unillustrated brackets.

Bent parts 13a and 13a are formed by bending the portions of the front bumper 13, which extend in a lateral direction of the vehicle body, toward the portions extending in a longitudinal direction of the vehicle body, and are supported by the left and right bulkhead sides 16 and 16 via a pair of brackets 21 and 21. A pair of left and right leg sweeping plates 26 and 26 are provided at positions which are at left and right opposite end portions of the bulkhead lower part 15 and which correspond to lower portions of the left and right bent portions 13a and 13a of the front bumper 13.

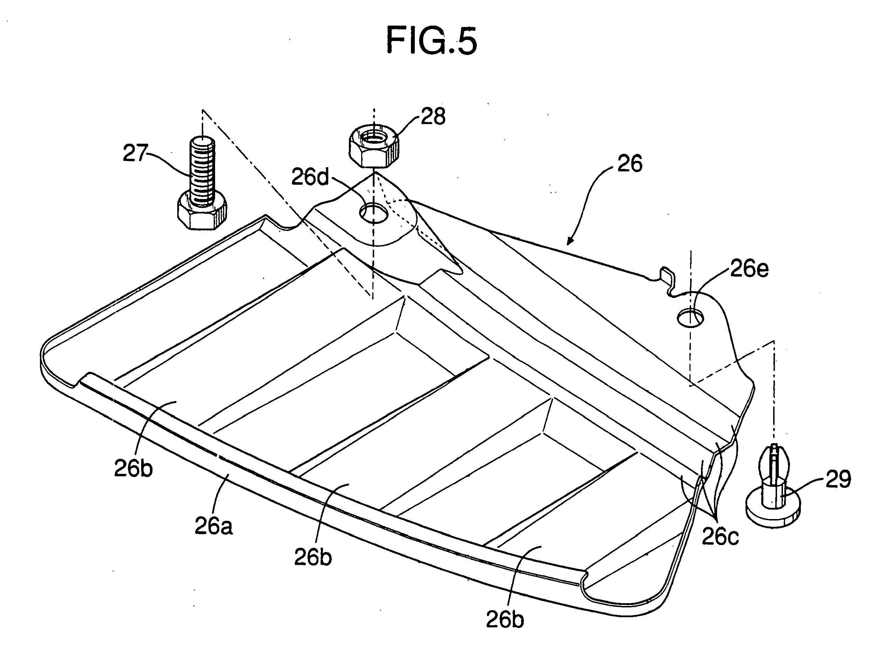

As is obvious from FIG. 5, the leg sweeping plate 26 is made by press-forming a metal plate, and its front edge portion 26a abutting on a back surface of a bumper face 19 is bent back into a J-shape. A plurality of reinforcing ribs 26b extending in the longitudinal direction of the vehicle body are formed at the rear side of the front edge portion 26a. An energy absorbing portion 26c having a shape of a plica whose ridges extend in the lateral direction of the vehicle body is formed in the rear of the reinforcing ribs 26b. A bolt hole 26d is formed at an inner end in the vehicle width direction of the energy absorbing portion 26c. A bolt 27, which penetrates through the bolt hole 26d, penetrates through a front edge of the bulkhead lower part 15 and is fastened to a nut 28. A clip hole 26e is formed in a rear edge of the leg sweeping plate 26 at a position near an outer end in the vehicle width direction. A clip 29 penetrating through the clip hole 26e is fixed to the front edge of the bulkhead lower part 15.

Accordingly, when the front bumper 13 of the automobile collides with a pedestrian, the front bumper 13 sweeps the leg portions under the knees of the pedestrian to throw up the pedestrian onto the bonnet, thereby reducing the impact of the collision. At this time, if the front bumper 13 is easily buckled, the pedestrian cannot be successfully thrown up onto the bonnet, but in this embodiment, a pair of left and right leg sweeping plates 26 and 26 are provided between the lower portion of the front bumper 13 and the bulkhead 11, and therefore, the rigidity of the lower portion of the front bumper 13 is appropriately enhanced to thereby effectively sweep the leg portions under the knees of the pedestrian. The rigidity in the longitudinal direction of the leg sweeping plate 26 can be especially enhanced by the reinforcing ribs 26b.

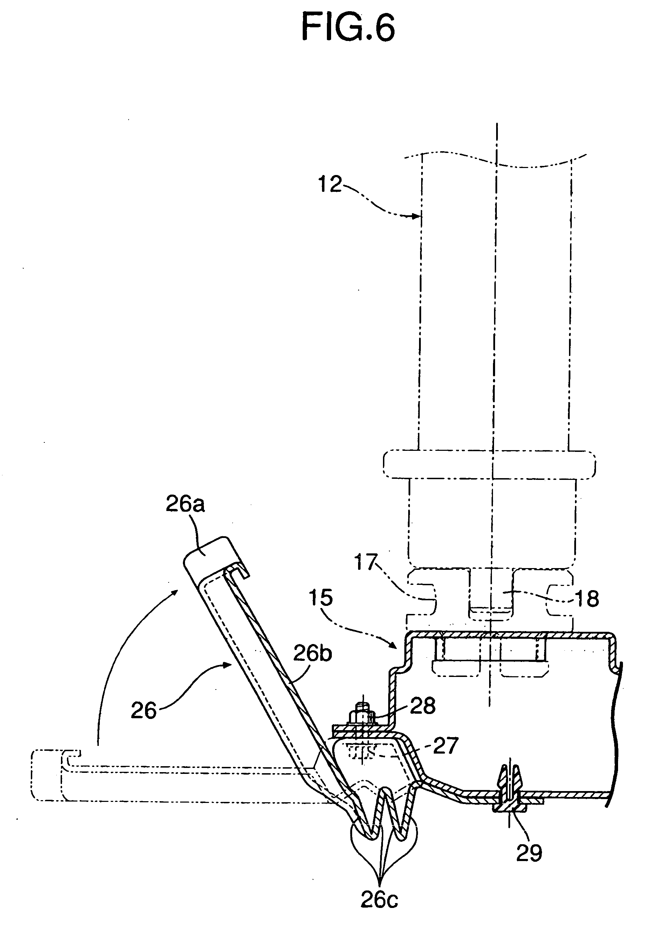

When the automobile lightly collides with another automobile or a fixed object, if the rigidity of the leg sweeping plates 26 and 26 is too large, there arises a problem of extending the damage to the bulkhead 11 to which the leg sweeping plates 26 and 26 are mounted, and to the front side frame connected to the bulkhead 11. However, according to this embodiment, when a compression load acts on each of the leg sweeping plates 26 in the longitudinal direction of the vehicle body by a light collision with the front bumper 13, the energy absorbing portion 26c at the rear sides of the reinforcing ribs 26b is easily deformed to be bent as shown in FIG. 6, because the front portion of the leg sweeping plate 26 is enhanced in rigidity by the reinforcing ribs 26b, whereby the bulkhead 11 and the front side frame can be prevented from being damaged by the impact of the collision.

When the front bumper 13 strongly collides with a pedestrian, the leg sweeping plates 26 and 26 are bent in the energy absorbing portions 26c and 26c, thereby weakening the impact to the legportions of the pedestrian.

As described above, the energy absorbing portions 26c and 26c which are easily bent by the load in the longitudinal direction are provided at a pair of left and right leg sweeping plates 26 and 26 which support the back surface of the front bumper 13 at the bulkhead 11. Therefore, when colliding with a pedestrian, the pedestrian is reliably thrown up onto the bonnet by suppressing buckling of the front bumper 13 with the leg sweeping plates 26 and 26; and when lightly colliding with an automobile or the like, the leg sweeping plates 2 6 and 2 6 are deformed at the energy absorbing portions 2 6c and 26c to avoiddamage to the bulkhead 11. In addition, the leg sweeping plates 26 and 26 are provided at only the left and right bent parts 13a and 13a of the front bumper 13, and therefore, the leg sweeping plates 26 and 26 are light and inexpensive as compared with the case of the leg sweeping plate which is provided over the entire front bumper 13.

Further, when a vehicle body on which a front bumper 13 has not been mounted, is transported on an overhead conveyor, the leg sweeping plates 26 position at the height of the face of an operator, but there is no fear of hurting the face of the operator because the front edge portions 26a are bent back into the J-shape.

The embodiment of the present invention has been described above, but the present invention is not limited to the above described embodiment, and various design changes can be made without departing from the present invention described in the claims.

For example, if the strength of the clip 29 fixing the leg sweeping plate 26 to the bulkhead lower part 15 is set so that the clip 29 breaks at the time of a light collision, the clip 29 breaks and the leg sweeping plate 26 rotates around the bolt 27 upon collision, thereby making it more difficult for the impact of the collision to be transmitted to the bulkhead 11.

## Claims

1. A vehicle body front part structure of an automobile, comprising leg sweeping plates (26) connected to a vehicle body at lower portions of left and right bent parts (13a) of a front bumper (13),
**characterized in that** each of the leg sweeping plates (26) has an energy absorbing portion (26c) that is formed into a shape of plica having ridges extending in a lateral direction of the vehicle body and that deforms to be bent when collision energy at the time of a light collision exceeds a predetermined value, thereby preventing deformation of the vehicle body, and
each of the leg sweeping plates (26) has a plurality of reinforcing ribs (26b) extending in a longitudinal direction of the vehicle body in front of the energy absorbing portion (26c).

2. A vehicle body front part structure for an automobile as claimed in claim 1, wherein the front edge portions (26a) of each of the leg sweeping plates (26) are bent back into a J-shape.

3. A vehicle body front part structure for an automobile as claimed in claim 1 or 2, wherein the leg sweeping plates (26) are connected to a vehicle bulkhead (16) by a connecting bolt (17) at an inner end of the vehicle width direction of the energy absorbing portion (26c) of each leg sweeping plate (26) and by a clip (29) at an outer end of the vehicle width direction of the leg sweeping plate, wherein the clips are each formed such that, when the collision energy at the time of a light collision exceeds a predetermined value, the clip (29) breaks and each leg sweeping plate (29) rotates around their respective bolts (27).

## Patentansprüche

1. Fahrzeugkarosserie-Vorderabschnittstruktur eines Kraftfahrzeugs, umfassend Ausläuferschwenkplatten (26), welche mit einer Fahrzeugkarosserie an unteren Abschnitten linker und rechter gebogener Teile (13a) eines vorderen Stoßfängers (13) verbunden sind, **dadurch gekennzeichnet, dass** jede der Ausläuferschwenkplatten (26) einen Energieaufnahmeabschnitt (26c) aufweist, welcher in Form einer Lamelle mit sich in einer seitlichen Richtung der Fahrzeugkarosserie erstreckenden Graten ausgebildet ist und welcher sich verformt, so dass er gebogen wird, wenn eine Kollisionsenergie zum Zeitpunkt einer leichten Kollision einen vorbestimmten Wert überschreiten, wodurch eine Verformung der Fahrzeugkarosserie verhindert wird, und wobei jede der Ausläuferschwenkplatten (26) eine Mehrzahl von Verstärkungsrippen (26b) aufweist, welche sich vor dem Energieaufnahmeabschnitt (26c) in einer Längsrichtung der Fahrzeugkarosserie erstrecken.

2. Fahrzeugkarosserie-Vorderabschnittstruktur eines Kraftfahrzeugs, nach Anspruch 1, In welcher die vorderen Randabschnitte (26a) jeder der Ausläuferschwenkplatten (26) in eine J-Form zurückgebogen sind.

3. Fahrzeugkarosserie-Vorderabschnittstruktur eines Kraftfahrzeugs, nach Anspruch 1 oder 2, in welcher die Ausläuferschwenkplatten (26) mit einer Fahrzeugschottwand (16) an einem in Fahrzeugbreitenrichtung inneren Ende des Energieabsorptionsabschnitts (26c) Jeder Ausläuferschwenkplatte (26) durch einen Verbindungsbolzen (17) und an einem in Fahrzeugbreitenrichtung äußeren Ende der Ausläuferschwenkplatte durch einen Klipp (29) verbunden sind, wobei die Klipps jeweils derart ausgebildet sind, dass dann, wenn die Kollisionsenergie zum Zeitpunkt einer leichten Kollision einen vorbestimmten Wert überschreitet, der Klipp (29) bricht und sich jede Ausläuferschwenkplatte (29) um ihren jeweiligen Bolzen (27) dreht.

## Revendications

1. Structure de partie avant de carrosserie d'un véhicule automobile, comprenant des plaques de balayage de jambe (26) raccordées à la carrosserie d'un véhicule au niveau des parties inférieures des parties cintrées gauche et droite (13a) d'un pare-chocs avant (13),
**caractérisée en ce que** chacune des plaques de balayage de jambe (26) comporte une partie d'absorption d'énergie (26c) en forme de pli comprenant des arêtes s'étendant dans une direction latérale de la carrosserie du véhicule et se déformant pour être cintrées quand l'énergie de la collision au moment d'une collision légère dépasse une valeur prédéterminée, empêchant ainsi la déformation de la carrosserie du véhicule, et
chacune des plaques de balayage de jambe (26) comprend une pluralité de nervures de renfort (26b) s'étendant dans une direction longitudinale de la carrosserie du véhicule en face de la partie d'absorption d'énergie (26c).

2. Structure de partie avant de carrosserie d'un véhicule automobile selon la revendication 1, dans laquelle les parties de bord frontales (26a) de chacune des plaques de balayage de jambe (26) sont recourbées en forme de J.

3. Structure de partie avant de carrosserie d'un véhicule automobile selon la revendication 1 ou 2, dans laquelle les plaques de balayage de jambe (26) sont raccordées à un tablier (16) de véhicule par un boulon de raccordement (17) à une extrémité intérieure de la direction en largeur du véhicule de la partie d'absorption d'énergie (26c) de chaque plaque de balayage de jambe (26) et par une attache (29) à une extrémité extérieure de la direction en largeur du véhicule de la plaque de balayage de jambe, dans lequel les attaches sont chacune formées de telle sorte que lorsque l'énergie de la collision au moment d'une collision légère dépasse une valeur prédéterminée, l'attache (29) se casse et chaque plaque de balayage de jambe (29) tourne autour de son boulon (27) respectif.
